# FASCICULE DE BREVET EUROPEEN

(11) **EP 2 710 257 B1**
(45) Date de publication et mention de la délivrance du brevet: **23.10.2019**
(21) Numéro de dépôt: 12726151.9
(22) Date de dépôt: 03.05.2012
(51) Int. Cl.: F03D 7/04, F03D 9/00, F03D 7/02, F03D 1/02, F03D 1/04, F03D 9/11, F03D 9/25, F03D 9/32, H02P 9/00

(54) **TURBINE A RENDEMENT OPTIMISE**
TURBINE MIT OPTIMIERTER EFFIZIENZ
TURBINE HAVING OPTIMISED EFFICIENCY

(30) Priorité: 16.05.2011 FR 1101476
(43) Date de publication de la demande: 26.03.2014
(73) Titulaire: SAVE INNOVATIONS, 38000 Grenoble (FR)
(72) Inventeur: PERRIERE, Bernard, F-38130 Échirolles (FR)
(74) Mandataire: Novaimo
(86) Numéro de dépôt international: PCT/FR2012/000172
(87) Numéro de publication internationale: WO 2012/156592

(56) Documents cités:
- EP-A1- 0 223 731
- WO-A1-2008/130940
- WO-A2-2009/129309

## Description

### Domaine de l'invention

La présente invention concerne une turbine et plus particulièrement une turbine pouvant être entraînée par un fluide de faible vitesse.

### Exposé de l'art antérieur

Une turbine est une machine pouvant convertir l'énergie cinétique d'un fluide incident en puissance mécanique sur un arbre tournant. Cette puissance mécanique est ensuite utilisée selon les besoins, par exemple pour faire fonctionner une pompe à eau ou pour faire tourner un alternateur qui génère un courant électrique. Une turbine comporte usuellement plusieurs pales solidaires d'un arbre moteur. Le nombre de pales et la forme des pales peuvent être très variés. Le fluide peut être liquide ou gazeux.

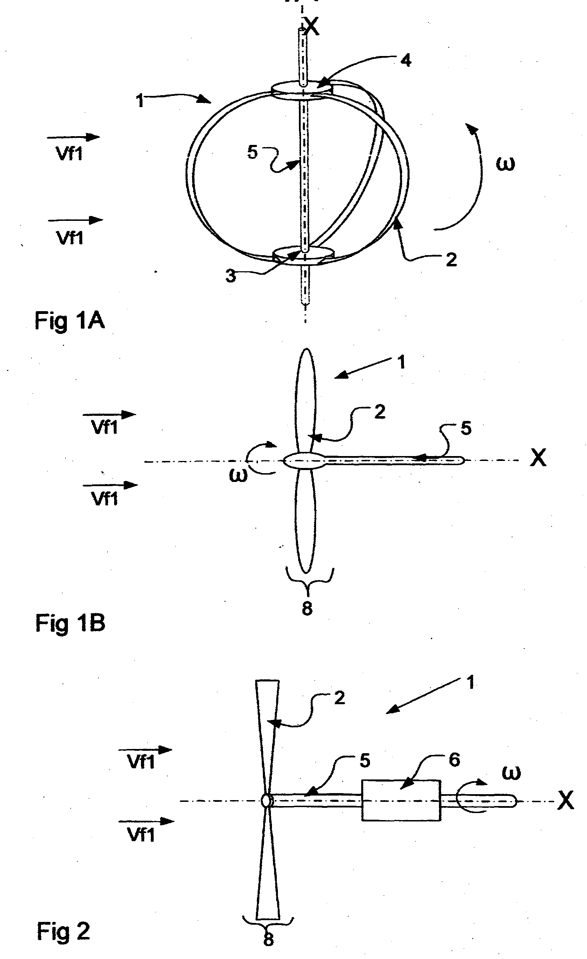

La figure 1A représente un premier type d'une turbine 1 selon l'art antérieur. Ladite turbine 1 comporte, par exemple, trois pales 2 de forme allongée. Chaque pale comporte deux extrémités distales chacune respectivement fixée en deux points 3 et 4 sur un arbre 5. L'arbre 5 est monté à rotation autour d'un axe central X. La section transversale des pales a, par exemple, sensiblement une forme d'aile d'avion orientée de telle façon que lorsqu'un fluide incident, dont la vitesse Vf1. est orientée orthogonalement à l'axe central X, agit sur les pales, il en résulte des forces sur les pales entraînant la rotation des pales autour de l'axe X selon une vitesse angulaire de rotation ω.

La figure 1B représente un deuxième type de turbine 1 selon l'art antérieur. Ladite turbine comporte des pales 2 formant une hélice 8 montée sur un arbre 5 perpendiculaire au plan de l'hélice. L'arbre 5 est monté à rotation autour de l'axe central X. Lorsqu'un fluide incident, dont la vitesse Vf1 est orientée selon l'axe X, agit sur les pales 2 de l'hélice, il en résulte des forces sur les pales entraînant la rotation de l'hélice 8 autour de l'axe central X selon une vitesse angulaire de rotation ω.

Il existe de nombreux autres types de turbines, comportant une ou plusieurs pales en rotation autour d'un axe central. Le rendement mécanique de la pale, défini comme le rapport entre l'énergie transmise à l'arbre moteur 5 par la pale 2 et l'énergie cinétique du fluide, est d'autant plus élevé que, pour un fluide incident donné, la puissance mécanique Pm disponible sur l'arbre 5 est élevée. Il est intéressant que ce rendement mécanique, qui traduit l'efficacité de la turbine, soit maximal.

Les pales des turbines existantes sont optimisées en rendement uniquement pour un fluide donné ayant une vitesse donnée. Par exemple le calage d'une hélice d'une éolienne est fixé en fonction de la vitesse moyenne du vent dominant.

Le document EP 0 223 731 A1 divulgue une turbine comprenant les caractéristiques du préambule de la revendication 1.

### Résumé

Un objet d'un mode de réalisation de la présente invention est de proposer une turbine dont le rendement mécanique est optimisé quelles que soient la vitesse ou les variations de la vitesse du fluide incident entraînant la ou les pales.

Un objet d'un autre mode de réalisation de la présente invention est de proposer une turbine dont le rendement mécanique n'est pas nul même pour de faibles valeurs de la vitesse du fluide destiné à entraîner la ou les pales.

Ainsi un mode de réalisation de la présente invention prévoit une turbine qui comporte une pale montée à rotation autour d'un axe central, une machine synchrone électromagnétique et des moyens d'ajustement de la vitesse angulaire de rotation de la pale par la machine synchrone électromagnétique pour optimiser le rendement mécanique de ladite pale en fonction de la vitesse du fluide incident agissant sur ladite pale.

La machine synchrone de la turbine comporte un rotor et un stator, le rotor comprenant un aimant de régulation monté sur la pale, le stator comportant au moins une bobine de régulation.

Selon un autre mode de réalisation de la présente invention, la turbine comporte un carter dans lequel est monté le stator, la pale étant disposée dans une cavité interne délimitée par le carter, ladite cavité comportant un profil conformé pour accélérer la vitesse du fluide au niveau de la pale par effet Venturi.

Selon un autre mode de réalisation de la présente invention, la pale de la turbine forme une hélice montée à rotation autour de l'axe central.

Selon un autre mode de réalisation de la présente invention, les moyens d'ajustement de la turbine comprennent des moyens de mesure de la vitesse angulaire de rotation de la pale et de la vitesse du fluide incident associé, lesdits moyens de mesure étant reliés à une unité logique de calcul pour calculer la vitesse angulaire optimale de rotation de la pale pour laquelle le rendement mécanique de la pale est maximum, et l'unité logique de calcul étant reliée à la machine synchrone pour ajuster la vitesse angulaire de rotation de la pale à la vitesse angulaire optimale de rotation.

Selon un autre mode de réalisation de la présente invention, la turbine comporte un générateur synchrone de courant qui comprend un inducteur et un induit, l'inducteur. comprenant un aimant de puissance monté sur ladite pale, et l'induit comportant au moins une bobine de puissance.

Selon un autre mode de réalisation de la présente invention, la bobine de régulation de la turbine est couplée par induction magnétique avec une bobine de puissance.

Selon un autre mode de réalisation de la présente invention, un aimant de puissance de la turbine est utilisé comme un aimant de régulation.

Un autre mode de réalisation de la présente invention prévoit un procédé de fonctionnement d'une turbine qui comporte les étapes suivantes : mesurer la vitesse du fluide et modifier la vitesse angulaire de la pale en fonction de la vitesse mesurée du fluide pour optimiser le rendement mécanique de ladite pale.

Un autre mode de réalisation de la présente invention prévoit un véhicule qui comporte une turbine comportant une pale montée à rotation autour d'un axe central, une machine synchrone électromagnétique et des moyens d'ajustement de la vitesse angulaire de rotation de la pale par la machine synchrone électromagnétique pour optimiser le rendement mécanique de ladite pale en fonction de la vitesse du fluide incident agissant sur ladite pale.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1A décrite précédemment est une vue schématique d'un premier type de turbine selon l'art antérieur ;
la figure 1B décrite précédemment est une vue schématique d'un deuxième type de turbine selon l'art antérieur ;
la figure 2 est une vue schématique d'une turbine selon un mode de réalisation de la présente invention ;
la figure 3 est un graphe représentant la puissance mécanique transmise sur l'arbre d'une turbine par une pale en fonction de la vitesse angulaire de rotation selon un mode de réalisation de la présente invention ;
la figure 4 est une vue de face d'une turbine selon un mode de réalisation de la présente invention ;
la figure 5 est un schéma synoptique d'une turbine comportant un système de contrôle selon un autre mode de réalisation de la présente invention ;
la figure 6 est une vue en coupe d'une turbine selon un autre mode de réalisation de la présente invention ;
la figure 7 est une vue de face d'une turbine associée à un générateur synchrone selon un autre mode de réalisation de la présente invention; et
la figure 8 est une vue de coté d'un tricycle électrique selon un autre mode de réalisation de la présente invention.

### Description détaillée

Par souci de clarté, seuls les éléments utiles à la compréhension de l'invention ont été représentés et seront décrits. Par souci de clarté, de mêmes éléments ont été désignés par de mêmes références aux différentes figures et, de plus, les diverses figures ne sont pas tracées à l'échelle.

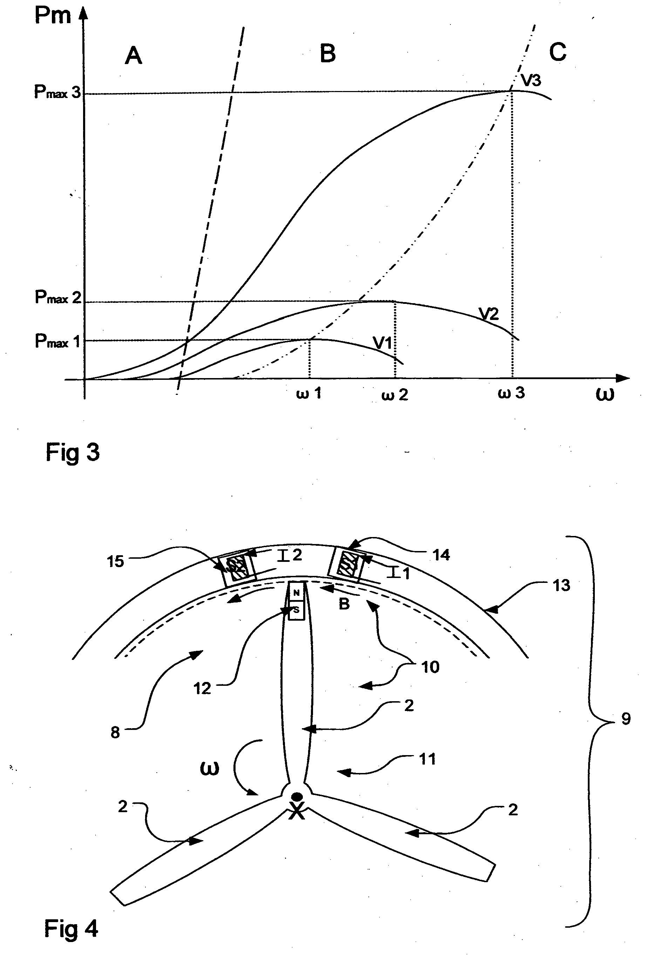

La figure 2 est une vue schématique d'une turbine 1 du deuxième type tel que défini ci-dessus en relation avec la figure 1B, selon un mode de réalisation de la présente invention. L'exemple est aisément transposable à tout type de turbine et en particulier à une turbine du premier type telle que décrite ci-dessus en relation avec la figure 1A. Une turbine 1 comporte au moins une pale 2 pouvant former une hélice 8 reliée, de préférence de manière fixe, à un arbre 5 monté à rotation autour de l'axe central X. Un moteur 6, de préférence réversible, est agencé avec la pale 2 de sorte à l'entraîner en rotation, ceci peut par exemple être réalisé en couplant le moteur 6 à l'arbre 5 de façon à pouvoir entraîner l'arbre 5 en rotation. De préférence, le moteur 6 est une machine synchrone électromagnétique. Le rendement mécanique de la pale 2 soumise à un fluide incident de vitesse Vf1 dépend de la vitesse de rotation de la pale 2 comme il sera enseigné ci-après en relation avec la figure 3. Le moteur 6 permet d'accélérer ou de ralentir la vitesse de rotation de la pale de façon à obtenir le meilleur rendement mécanique possible. Ainsi, de façon surprenante, pour augmenter le rendement d'une turbine 1 destinée à entraîner un arbre moteur 5, il est intéressant d'entraîner ladite pale 2 avec un moteur électrique soit pour augmenter la vitesse de rotation de la pale soit pour la diminuer. Autrement dit, la turbine comporte au moins une pale 2 montée à rotation autour d'un axe central X, une machine synchrone électromagnétique et des moyens d'ajustement de la vitesse angulaire ω de rotation de la pale 2 par la machine synchrone électromagnétique pour optimiser le rendement mécanique de ladite pale en fonction de la vitesse Vf1 du fluide incident agissant sur la pale 2.

La figure 3 est un graphe représentant la puissance mécanique Pm transmise sur l'arbre d'une turbine par une pale en fonction de la vitesse angulaire de rotation de la pale et paramétré par la vitesse du fluide incident. La vitesse angulaire de rotation ω est reportée sur l'axe des abscisses nommé ω, la puissance mécanique Pm transmise sur l'arbre de rotation est reportée sur l'axe des ordonnées nommé Pm. Trois courbes V1, V2, V3 sont tracées pour trois vitesses croissantes Vfa, Vfb, Vfc du fluide incident. Le graphe comporte trois régions A, B et C. La première région A, correspond à des faibles vitesses angulaires de rotation ω de la pale. La puissance mécanique Pm transmise à l'arbre croit très lentement avec la vitesse angulaire ω de rotation de la pale, et peut rester nulle si la vitesse du fluide est réduite (cas des courbes V1 et V2 du graphe). Dans cette première région A les frottements statiques de la turbine sont prépondérants et peuvent, à la limite, empêcher la mise en rotation de la pale. La deuxième région B correspond à une vitesse angulaire modérée de la pale. La puissance mécanique Pm transmise à l'arbre en rotation augmente régulièrement avec la vitesse angulaire de rotation ω de la pale. Dans cette zone B les frottements statiques n'existent plus, les frottements dynamiques restent faibles. Lorsque la vitesse de rotation de la pale augmente l'angle d'incidence de la pale dans le fluide diminue par effet du changement de direction de la vitesse relative du fluide sur la pale en mouvement. La traînée de la pale dans le fluide diminue, sa portance augmente, le rendement aérodynamique augmente. La puissance mécanique Pm transmise sur l'arbre en rotation augmente avec la vitesse de rotation de l'arbre jusqu'à un optimum PMax1, PMax2, PMax3 correspondant respectivement aux vitesses angulaires de rotation ω1, ω2, ω3 de la pale. La troisième région C correspond à des vitesses angulaires élevées de rotation de la pale. La puissance motrice Pm transmise à l'arbre diminue lorsque la vitesse angulaire de la pale augmente au-delà de ω1, ω2, ω3 car l'angle d'incidence du fluide incident sur la pale n'est plus adapté au profil de la pale (ce qui entraîne une diminution des forces de portance, et une augmentation des forces de trainée). De plus, les forces de frottements dynamiques augmentent fortement.

En résumé, à titre d'exemple, le graphe de la figure 3 montre que pour une pale donnée et pour une vitesse du fluide incident donnée, il existe une vitesse angulaire de rotation optimale ω1, ω2, ω3 de la pale, pour laquelle la puissance mécanique PMax1, PMax2, PMax3, et par conséquent le rendement mécanique de la pale, ou de la turbine, est maximisé. Pour des vitesses suffisamment faibles du fluide incident associées à de faibles vitesses angulaires ω de rotation de la pale, la puissance transmise sur l'arbre par la pale est nulle. Dans ce cas, l'arbre ne peut pas être mis en rotation sans système annexe. De plus, pour des vitesses angulaires de rotation ω suffisamment élevées, le rendement mécanique de la pale chute. Il résulte de cette constatation que, paradoxalement, il peut être préférable pour optimiser le rendement de la turbine de diminuer la vitesse de rotation angulaire ω de la pale.

La figure 4 est une vue de face d'une turbine selon un mode de réalisation de la présente invention. La turbine 9 représentée en figure 4 est un exemple de réalisation, notamment pour la machine synchrone 6, de la turbine 1 représentée à la figure 2. Le fonctionnement de la machine synchrone électromagnétique est bien connu de l'homme du métier et ne sera pas détaillé ici. Une machine synchrone électromagnétique 10 telle que représentée en figure 4, comporte un rotor 11 muni d'au moins un aimant de régulation 12 et d'un stator 13, ledit stator étant pris comme référence fixe. Le rotor 11 est formé par au moins une pale 2, par exemple d'hélice 8, sur laquelle est fixé l'aimant de régulation 12. Bien entendu, l'hélice pouvant comporter plusieurs pales, sur chaque ou plusieurs pales de l'hélice, un aimant de régulation 12 pourra être fixé. L'aimant de régulation 12 peut être un aimant permanent ou un électroaimant alimenté par un courant continu. De préférence, l'aimant de régulation 12 est fixé en bout de pale 2 ou sur une excroissance de la pale 2 prévue à cet effet. Un aimant de régulation 12 est représenté symboliquement par un parallélépipède orienté par les pôles magnétiques de l'aimant. Toute configuration usuelle des aimants d'un rotor d'une machine tournante synchrone est utilisable pourvu que l'aimant de régulation soit solidaire de la pale 2 de l'hélice 8. Le stator 13 est muni d'au moins une bobine de régulation 14 ou 15. Sur la figure 4 deux bobines de régulation 14, 15 sont représentées symboliquement. Toute configuration des bobines de régulation, par exemple avec noyaux magnétiques et entrefers, usuellement utilisée dans les machines tournantes électromagnétiques, est utilisable. Selon le mode de fonctionnement connu d'une machine synchrone, les bobines de régulation du stator 14, 15 sont alimentées en courant électrique alternatif I1, I2 de façon à créer un champ magnétique B tournant autour de l'axe central X. Le rotor 11, muni d'un aimant de régulation 12 soumis au champ magnétique B tournant généré par le stator 13 est entraîné dans un mouvement de rotation synchronisé avec le champ magnétique B du stator. La vitesse de rotation de la machine synchrone 10 est déterminée par la fréquence des courants alternatifs I1, I2 alimentant les bobines de régulation 14, 15 du stator 13. Il est connu qu'une telle machine synchrone, munie de capteurs de position du rotor, peut être amenée à une vitesse de rotation prédéfinie à partir d'une position arrêtée du rotor 11 ("moteur sans balais" ou "brushless" en langue anglaise). L'amplitude et la phase des courants I1, I2 dans les bobines de régulation 14, 15 déterminent un comportement moteur ou un comportement générateur de courant de la machine synchrone. De façon générale, un comportement moteur a tendance à accélérer la vitesse de rotation de ω de la pale 2 autour de l'axe central X en consommant de la puissance électrique dans les bobines de régulation. De façon générale, un comportement générateur de courant a tendance à décélérer la vitesse de rotation ω de la pale 2 autour de l'axe central X en fournissant du courant électrique aux alimentations des bobines de régulation.

Une telle machine synchrone fonctionnant en symbiose avec une hélice d'une turbine peut être adaptée à tout type de turbine à pales tournantes autour d'un axe central et en particulier aux turbines du premier type telles que définies en relation avec la figure 1A. Il suffit pour cela de fixer au moins un aimant de régulation sur au moins une pale tournante qui fonctionnent alors comme le rotor d'une machine synchrone. Le stator est agencé autour de la au moins une pale afin de générer le champ magnétique tournant nécessaire à l'entrainement en rotation du rotor. Il est préférable, mais non indispensable, de fixer l'aimant de régulation en position distale par rapport à l'axe central X de rotation afin que les forces appliquées à aimant de régulation aient un couple maximum par rapport à l'axe X de rotation de la pale. La machine synchrone 10 peut fonctionner avec une seule pale et comporter un seul aimant de régulation 12 et une seule bobine de régulation 14. Dans cette configuration particulière de la machine synchrone 10, à chaque tour de la pale 2, une impulsion motrice ou bien une impulsion de freinage peut être appliquée par l'unique bobine de régulation 14 à l'unique aimant de régulation 12.

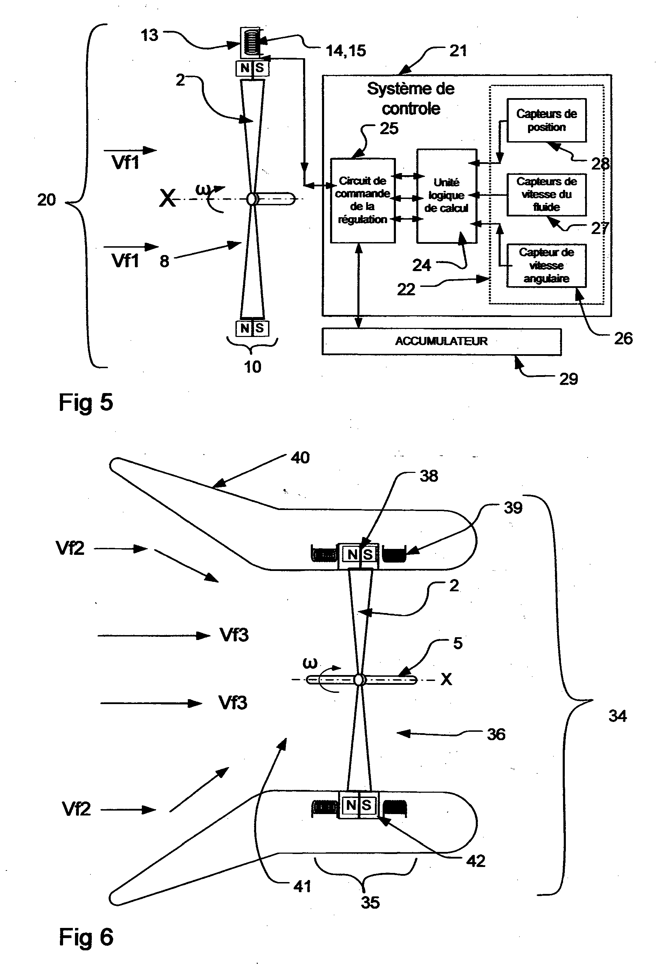

La figure 5 est un schéma synoptique d'une turbine 20 comportant un système de contrôle 21 pouvant au moins en partie former les moyens d'ajustement visés ci-dessus selon un autre mode de réalisation de la présente invention. A titre d'exemple la turbine 9, décrite ci-dessus en relation avec la figure 4, a été utilisée pour former une partie de la turbine 20 décrite en relation avec la figure 5. Toute autre turbine, associée à une machine synchrone 6, pourrait être utilisée. La turbine 20 comporte l'hélice 8 montée à rotation autour de l'axe central X et formant le rotor de la machine tournante synchrone 10. Le stator 13 de cette machine tournante comporte les bobines de régulation 14, 15. Le système de contrôle 21 comporte un ensemble de capteurs 22, une unité logique de calcul 24 et des circuits de commande de régulation 25. L'ensemble de capteurs 22 comporte, au moins, un capteur 26 de la vitesse angulaire ω de la pale 2, un capteur de vitesse du fluide 27 et de manière optionnelle et non indispensable un capteur de position 28 de la pale. La réalisation pratique de tels capteurs est connue de l'homme du métier et ne sera pas détaillée. Le système de contrôle 21 peut comporter une unité logique de calcul, par exemple un microcontrôleur, laquelle prend en compte les valeurs fournies par les différents capteurs 26, 27, 28. L'unité logique de calcul détermine, par exemple en fonction d'abaques de fonctionnement qu'il a en mémoire, si pour améliorer le rendement mécanique de la pale il est nécessaire d'accélérer ou de ralentir la vitesse de rotation ω de la pale. L'unité logique de calcul commande alors un circuit de commande de régulation qui alimente les bobines de régulation 14, 15 du stator 13 en courants I1, I2. De la fréquence, de l'amplitude et de la phase de ces courants dépendra le comportement moteur ou générateur de la machine synchrone 10. Le courant nécessaire au fonctionnement de la machine synchrone 10 est fourni, ou absorbé par un accumulateur 29 ou un réseau électrique externe à la turbine.

Le rendement d'un tel système de contrôle est optimal car il est apte à récupérer l'énergie cinétique de la pale en rotation en transformant cette énergie cinétique en courant électrique durant les phases où la machine synchrone fonctionne en générateur de courant. Enfin comme cela a été précisé en relation avec la figure 4, le capteur de position 28 n'est indispensable que si, pour le mode de réalisation choisi, la machine synchrone 10 doit, pour des raisons d'optimisation de rendement mécanique pour des très faibles vitesses Vf1 du fluide incident, lancer la pale en rotation à partir d'un état statique, où la pale 2 est à l'arrêt, le fluide seul n'étant pas suffisant pour entrainer la pale dans un état de rotation autour de l'axe X.

La figure 6 est une vue en coupe d'une turbine selon un autre mode de réalisation de la présente invention. La figure 6 illustre un mode de réalisation dans lequel une turbine 34 comporte une machine synchrone 35 qui comporte un rotor 36 et un stator 37. Le rotor 36 comprend au moins un aimant de régulation 38 monté sur au moins une pale 2, de préférence en position distale par rapport à l'axe central de rotation X. Le stator 37, entourant le rotor 36, comporte au moins une bobine de régulation 39. Selon ce mode de réalisation, le stator est monté dans un carter 40 délimitant une cavité interne 41 dans laquelle est disposée ladite au moins une pale 2. La cavité interne 41 comporte, de préférence, un profil conformé pour accélérer la vitesse du fluide au niveau de la pale 2 par effet Venturi. De préférence, la cavité est ouverte à deux extrémités, le fluide pouvant s'engouffrer dans une première extrémité, et ressortir de la cavité par une seconde extrémité. Ainsi, le plan dans lequel s'inscrit la rotation de la pale peut alors être sensiblement perpendiculaire à la direction du fluide empruntant les ouvertures de la cavité au niveau de ses extrémités. Le carter 40 en augmentant la vitesse du fluide Vf3 au niveau de la pale 2 est un moyen supplétif permettant d'améliorer le rendement mécanique de la turbine notamment pour des vitesses initiales Vf2 faibles du fluide incident, selon l'enseignement associé à la figure 3. De préférence, l'aimant de régulation 38 est fixé en bout de pale. L'aimant de régulation 38 peut être fixé sur une excroissance de la pale prévue à cet effet.

Selon une mise en œuvre particulière du mode de réalisation de la figure 6, le carter 40 comporte au niveau de la cavité interne une rainure annulaire 42 formée dans le plan dans lequel s'inscrit la rotation de la pale 2. Cette rainure annulaire 42 est conformée pour recevoir l'aimant de régulation 38 disposé en bout de pale 2 et permettre à ce dernier de se déplacer dans la rainure 42 lorsque la pale 2 le portant est en rotation. Cette disposition est particulièrement favorable pour ne pas perturber le flux du fluide incident par la présence de l'aimant régulateur 38.

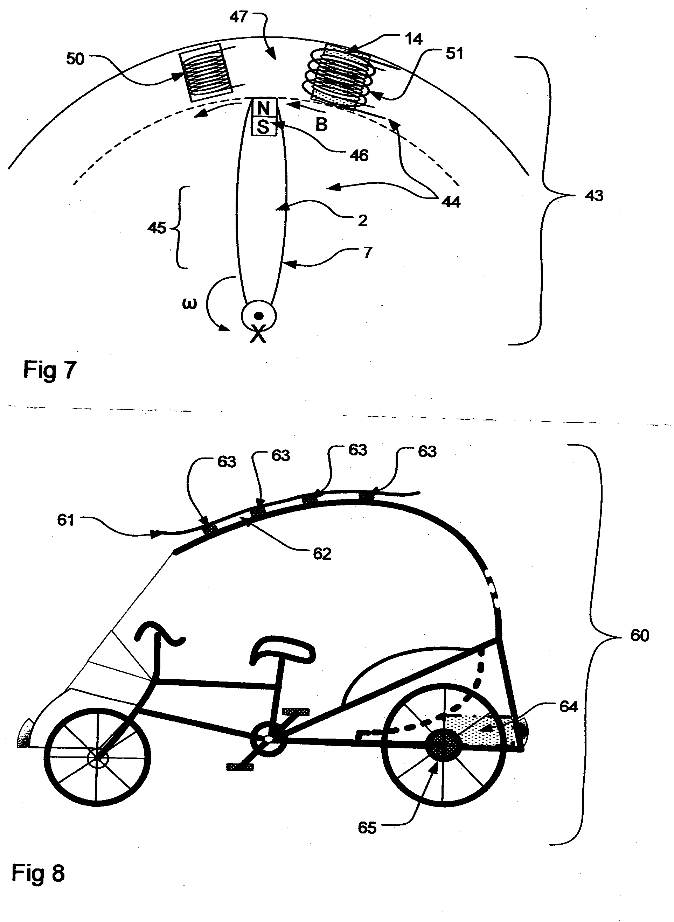

La figure 7 est une vue de face d'une turbine 43 selon un autre mode de réalisation de la présente invention. La machine tournante synchrone 10 décrite en relation avec la figure 4 et destinée à ajuster et à réguler la vitesse de rotation ω de la pale 2 est complétée par une deuxième machine synchrone électromagnétique 44, configurée en générateur de courant pour fournir de l'énergie électrique.

Le générateur de courant synchrone électromagnétique 44 comporte un inducteur 45 muni d'au moins un aimant de puissance 46, de préférence monté sur la pale 2 et un induit 47 comportant au moins une bobine de puissance. L'induit est pris comme référence fixe. L'inducteur 45 selon l'exemple de réalisation de la figure 7 est formé par la pale 2 de l'hélice 8 sur laquelle est fixé un aimant de puissance 46. Cet aimant de puissance 46 peut être un aimant permanent ou un électroaimant alimenté par un courant continu. De préférence, l'aimant de puissance 46 est fixé en bout de pale ou sur une excroissance de la pale prévue à cet effet. L'aimant de puissance 46 est représenté par un parallélépipède orienté par les pôles magnétiques de l'aimant sur la figure 7 mais toute configuration usuelle des aimants d'un inducteur d'un générateur synchrone est utilisable pourvu que l'aimant de puissance 46 soit solidaire de la pale 2 de l'hélice 8. L'induit 47 du générateur synchrone 44 est muni de bobines de puissance 50, 51. Sur la figure 7 les bobines de puissance sont représentées symboliquement. Toute configuration des bobines de puissance, par exemple avec noyaux magnétiques et entrefers, usuellement utilisée dans les générateurs de courant synchrone électromagnétiques, est utilisable. L'inducteur 45 et l'induit 47 ainsi décrits forment le générateur synchrone 44 de courant apte à se superposer et à coopérer à la machine synchrone 10 décrite en relation avec la figure 4. Dans le cas où l'inducteur 45 comporte plusieurs aimants de puissance 46, certains de ces aimants de puissance 46 peuvent, par exemple, être utilisés comme des aimants régulateurs 12 créant une induction magnétique variable dans les noyaux de bobines de régulation 14, 15. Certaines bobines de régulation 14 (ou 15) peuvent, par exemple, être couplées par induction magnétique à des bobines de puissance 50, 51. La figure 7 illustre cette dernière configuration. La bobine de puissance 51 entoure la bobine de régulation 14, il y a création d'une inductance mutuelle entre les deux bobines respectivement de puissance et de régulation 51 et 14 qui se comportent comme le primaire et le secondaire d'un transformateur électrique. Ainsi une partie du courant de puissance généré par le générateur synchrone de courant 44 est récupéré par une bobine de régulation 14 afin d'alimenter l'ensemble des autres bobines de régulation pour modifier la vitesse angulaire de rotation ω de la pale 2 autour de l'axe X. La turbine 43 est alors une turbo turbine en ce sens qu'une partie de la puissance électrique générée par la turbine est utilisable pour accélérer la vitesse de rotation de ladite turbine afin d'atteindre rapidement la vitesse de rotation optimale pour laquelle le rendement mécanique est maximisé. Le système de contrôle de la vitesse angulaire de la pale 2, décrit en relation avec la figure 5 est facilement programmable et adaptable par l'homme du métier à la turbo turbine 43 définie ci-dessus.

La présente invention peut notamment être avantageusement adaptée à une ou plusieurs éoliennes embarquées sur un véhicule. En particulier, la figure 8 est une vue de coté d'un tricycle électrique selon un autre mode de réalisation de la présente invention. Le tricycle 60 de la figure 8 comporte un carter 61 formant un toit et délimitant une cavité interne 62 ouverte dans le sens du déplacement du véhicule et profilée pour accélérer la vitesse de l'air par effet Venturi. Dans la cavité interne 62 est disposée au moins une turbine (éoliennes) 63 selon la présente invention pouvant fournir un courant électrique même pour des faibles vitesses, fortement variables, du tricycle. Le tricycle est équipé d'un accumulateur électrique 64 apte à stocker l'énergie électrique produite par les éoliennes 63. Le tricycle comporte un moteur électrique 65 par exemple réversible et par exemple monté sur l'axe de la roue arrière. Lorsque le tricycle est à l'arrêt les éoliennes peuvent, selon les conditions climatiques, recharger l'accumulateur 64. Lorsque le tricycle descend une pente, un double freinage est effectué. Le premier freinage est un freinage aérodynamique effectué par les éoliennes 63 qui rechargent alors l'accumulateur 64. Le deuxième freinage est procuré par le moteur réversible 65 fonctionnant en générateur de courant et rechargeant également la batterie. Lorsque le tricycle avance vent debout, les éoliennes 63 génèrent un courant électrique d'autant plus élevé que la vitesse du vent relatif est forte. L'énergie électrique ainsi produite est utilisable, par exemple, par le moteur réversible 65 pour aider à faire avancer le tricycle. Dans tous les cas l'énergie électrique produite par les turbines 63 est utilisable pour faire avancer le tricycle électrique ou pour tout autre usage.

Des modes de réalisation particuliers de la présente invention ont été décrits. Diverses variantes et modifications apparaîtront à l'homme de l'art. En particulier, la forme et le mode de fonctionnement mécanique des turbines ne sont pas limités. En particulier tous les modes de réalisations décrits sont adaptables aux turbines ne comportant qu'une seule pale et sont réalisables avec une seule bobine de régulation. La présente invention est applicable aux turbines dont le fluide incident est liquide ou gazeux et aux éoliennes qui sont un cas particulier de turbines. La puissance et les dimensions de la turbine sont quelconques. Par exemple, l'invention est applicable aux éoliennes ayant une hélice de plusieurs mètres de diamètre hautes de plusieurs dizaines de mètres et de la même façon aux microéoliennes utilisables dans des dispositifs nomades tenant dans la main.

Toutes sortes de dispositifs mécaniques utilisant la puissance mécanique générée par la turbine de la présente invention peuvent être reliés à cette turbine. Les turbines de la présente invention peuvent coopérer avec toute source d'énergie, électrique ou mécanique, pour son fonctionnement.

Le système de contrôle et l'accumulateur décrits en relation avec la figure 5 peuvent être intégrés sur une même puce électronique.

Divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Turbine (1, 9, 20, 34, 43, 63) comportant une pale (2) montée à rotation autour d'un axe central (X), une machine synchrone électromagnétique (6, 10, 35, 65) et des moyens d'ajustement de la vitesse angulaire (ω) de rotation de la pale (2) par la machine synchrone électromagnétique (6, 10, 35, 65) pour optimiser le rendement mécanique de ladite pale en fonction de la vitesse (Vf1, Vf2, Vf3) du fluide incident agissant sur ladite pale (2), **caractérisée en ce que** la machine synchrone (6, 10, 35, 65) comporte un rotor (11,36) et un stator (13, 37, 47), le rotor (11,36) comprenant un aimant de régulation (12, 38) monté sur la pale (2), le stator (13, 37, 47) comportant au moins une bobine de régulation (14, 15, 39).

2. Turbine (1, 9, 20, 34, 43, 63) selon la revendication 1, dans laquelle la machine synchrone (6, 10, 35, 65) comprend un moteur configuré pour accélérer la vitesse angulaire (ω) de rotation de la pale (2).

3. Turbine (1, 9, 20, 34, 43, 63) selon l'une des revendications 1 ou 2, comportant un carter (40, 61) dans lequel est monté le stator (13, 37, 47), la pale (2) étant disposée dans une cavité interne (41, 62) délimitée par le carter (40, 61), ladite cavité (41, 62) comportant un profil conformé pour accélérer la vitesse du fluide (Vf1, Vf2, Vf3) au niveau de la pale (2) par effet Venturi.

4. Turbine (1, 9, 20, 34, 43, 63) selon l'une quelconque des revendications précédentes, dans laquelle la pale (2) forme une hélice (8) montée à rotation autour de l'axe central (X).

5. Turbine (1, 9, 20, 34, 43, 63) selon l'une quelconque des revendications précédentes, dans laquelle les moyens d'ajustement comprennent des moyens de mesure de la vitesse angulaire (ω) de rotation de la pale (2) et de la vitesse (Vf1, Vf2, Vf3) du fluide incident associé, lesdits moyens de mesure étant reliés à une unité logique de calcul (24) pour calculer la vitesse angulaire optimale de rotation (ω1, ω2, ω3) de la pale (2) pour laquelle le rendement mécanique de la pale (2) est maximum, et l'unité logique de calcul étant reliée à la machine synchrone (6, 10, 35, 65) pour ajuster la vitesse angulaire de rotation de la pale (2) à la vitesse angulaire optimale (ω1, ω2, ω3) de rotation.

6. Turbine (1, 9, 20, 34, 43, 63) selon l'une quelconque des revendications précédentes, comportant un générateur synchrone de courant (44) comprenant un inducteur (45) et un induit (47), l'inducteur comprenant un aimant de puissance (46) monté sur ladite pale (2), et l'induit comportant au moins une bobine de puissance (50, 51).

7. Turbine (1, 9, 20, 34, 43, 63) selon la revendication 6, dans laquelle une bobine de régulation (14, 15, 39) est couplée par induction magnétique avec une bobine de puissance (50, 51).

8. Turbine (1, 9, 20, 34, 43, 63) selon la revendication 6 ou 7, dans laquelle un aimant de puissance (46) est utilisé comme un aimant de régulation (12, 38).

9. Procédé de fonctionnement d'une turbine (1, 9, 20, 34, 43, 63) selon la revendication 1 comportant les étapes suivantes :
- mesurer la vitesse du fluide (Vf1, Vf2, Vf3);
- modifier vitesse angulaire (ω) de la pale (2) en fonction de la vitesse mesurée du fluide pour optimiser le rendement mécanique de ladite pale (2).

10. Véhicule (60) comportant une turbine (1, 9, 20, 34, 43, 63) selon la revendication 1.

## Patentansprüche

1. Turbine (1, 9, 20, 34, 43, 63), umfassend eine Schaufel (2), die drehbar um eine zentrale Achse (X) montiert ist, eine elektromagnetische Synchronmaschine (6, 10, 35, 65) und Mittel zur Einstellung der Winkeldrehgeschwindigkeit (ω) der Schaufel (2) durch die elektromagnetische Synchronmaschine (6, 10, 35, 65), um die mechanische Leistung der Schaufel in Abhängigkeit von der Geschwindigkeit (Vf1, Vf2, Vf3) des eintreffenden Fluids, das auf die Schaufel (2) einwirkt, zu optimieren, **dadurch gekennzeichnet, dass** die Synchronmaschine (6, 10, 35, 65) einen Rotor (11, 36) und einen Stator (13, 37, 47) umfasst, wobei der Rotor (11, 36) einen Regulierungsmagneten (12, 38) umfasst, der auf der Schaufel (2) montiert ist, wobei der Stator (13, 37, 47) mindestens eine Regulierungsspule (14, 15, 39) umfasst.

2. Turbine (1, 9, 20, 34, 43, 63) nach Anspruch 1, bei der die Synchronmaschine (6, 10, 35, 65) einen Motor umfasst, der eingerichtet ist, um die Winkeldrehgeschwindigkeit (ω) der Schaufel (2) zu beschleunigen.

3. Turbine (1, 9, 20, 34, 43, 63) nach einem der Ansprüche 1 oder 2, umfassend ein Gehäuse (40, 61), in dem der Stator (13, 37, 47) montiert ist, wobei die Schaufel (2) in einem inneren Hohlraum (41, 62) angeordnet ist, der von dem Gehäuse (40, 61) begrenzt ist, wobei der Hohlraum (41, 62) ein Profil umfasst, das ausgebildet ist, um die Geschwindigkeit des Fluids (Vf1, Vf2, Vf3) im Bereich der Schaufel (2) durch Venturi-Effekt zu beschleunigen.

4. Turbine (1, 9, 20, 34, 43, 63) nach einem der vorhergehenden Ansprüche, bei der die Schaufel (2) eine Schraube (8) bildet, die drehbar um die zentrale Achse (X) montiert ist.

5. Turbine (1, 9, 20, 34, 43, 63) nach einem der vorhergehenden Ansprüche, bei der die Einstellungsmittel Mittel zum Messen der Winkeldrehgeschwindigkeit (ω) der Schaufel (2) und der Geschwindigkeit (Vf1, Vf2, Vf3) des zugehörigen eintreffenden Fluids umfassen, wobei die Mittel zum Messen mit einer logischen Recheneinheit (24) verbunden sind, um die optimale Winkeldrehgeschwindigkeit (ω1, ω2, ω3) der Schaufel (2) zu berechnen, bei der die mechanische Leistung der Schaufel (2) maximal ist, und wobei die logische Recheneinheit mit der Synchronmaschine (6, 10, 35, 65) verbunden ist, um die Winkeldrehgeschwindigkeit der Schaufel (2) an die optimale Winkeldrehgeschwindigkeit (ω1, ω2, ω3) anzupassen.

6. Turbine (1, 9, 20, 34, 43, 63) nach einem der vorhergehenden Ansprüche, umfassend einen Synchronstromgenerator (44), umfassend einen Induktor (45) und einen Anker (47), wobei der Induktor einen Leistungsmagneten (46) umfasst, der auf der Schaufel (2) montiert ist, und wobei der Anker mindestens eine Leistungsspule (50, 51) umfasst.

7. Turbine (1, 9, 20, 34, 43, 63) nach Anspruch 6, bei der eine Regulierungsspule (14, 15, 39) durch magnetische Induktion mit einer Leistungsspule (50, 51) gekoppelt ist.

8. Turbine (1, 9, 20, 34, 43, 63) nach Anspruch 6 oder 7, bei der ein Leistungsmagnet (46) als Regulierungsmagnet (12, 38) verwendet wird.

9. Verfahren zum Betreiben einer Turbine (1, 9, 20, 34, 43, 63) nach Anspruch 1, umfassend die folgenden Schritte:
- Messen der Geschwindigkeit des Fluids (Vf1, Vf2, Vf3);
- Ändern der Winkelgeschwindigkeit (ω) der Schaufel (2) in Abhängigkeit von der gemessenen Geschwindigkeit des Fluids, um die mechanische Leistung der Schaufel (2) zu optimieren.

10. Fahrzeug (60), umfassend eine Turbine (1, 9, 20, 34, 43, 63) nach Anspruch 1.

## Claims

1. A turbine (1, 9, 20, 34, 43, 63) comprising a blade (2) mounted to rotate about a central axis (X), a synchronous electromagnetic machine (6, 10, 35, 65) and adjustment means of the rotational angular velocity (ω) of the blade (2) by the synchronous electromagnetic machine (6, 10, 35, 65) in order to optimize the mechanical efficiency of said blade according to the speed (Vf1, Vf2, Vf3) of the incident fluid impinging upon said blade (2), **characterized in that** the synchronous machine (6, 10, 35, 65) comprises a rotor (11, 36) and a stator (13, 37, 47), the rotor (11, 36) comprising a regulator magnet (12, 38) mounted on the blade (2), the stator (13, 37, 47) comprising at least one regulator coil (14, 15, 39).

2. The turbine (1, 9, 20, 34, 43, 63) as claimed in claim 1, in which the synchronous machine (6, 10, 35, 65) comprises a motor configured to accelerate the rotational angular velocity (ω) of the blade (2).

3. The turbine (1, 9, 20, 34, 43, 63) as claimed in one of claims 1 and 2, comprising a casing (40, 61) in which the stator (13, 37, 47) is mounted, the blade (2) being arranged in an internal cavity (41, 62) delimited by the casing (40, 61), said cavity (41, 62) comprising a profile configured to accelerate the speed of the fluid (Vf1, Vf2, Vf3) in the region of the blade (2) using a Venturi effect.

4. The turbine (1, 9, 20, 34, 43, 63) as claimed in any one of the preceding claims, in which the blade (2) forms an impeller (8) mounted to rotate about the central axis (X).

5. The turbine (1, 9, 20, 34, 43, 63) as claimed in any one of the preceding claims, in which the adjustment means comprise means of measuring the rotational angular velocity (ω) of the blade (2) and the speed (Vf1, Vf2, Vf3) of the associated incident fluid, said measurement means being connected to a processing unit (24) for calculating the optimum rotational angular velocity (ω1, ω2, ω3) of the blade (2) for which velocity the mechanical efficiency of the blade (2) is at a maximum, and the processing unit being connected to the synchronous machine (6, 10, 35, 65) so as to adjust the rotational angular velocity of the blade (2) to the optimum rotational angular velocity (ω1, ω2, ω3).

6. The turbine (1, 9, 20, 34, 43, 63) as claimed in any one of the preceding claims, comprising a synchronous current generator (44) comprising a field system (45) and an armature (47), the field system comprising a power magnet (46) mounted on said blade (2), and the armature comprising at least one power coil (50, 51).

7. The turbine (1, 9, 20, 34, 43, 63) as claimed in claim 6, in which a regulator coil (14, 15, 39) is coupled by magnetic induction with a power coil (50, 51).

8. The turbine (1, 9, 20, 34, 43, 63) as claimed in claim 6 or 7, in which a power magnet (46) is used as a regulator magnet (12, 38).

9. A method of operating a turbine (1, 9, 20, 34, 43, 63) as claimed in claim 1, involving the following steps:
- measuring the speed of the fluid (Vf1, Vf2, Vf3);
- altering the angular velocity (ω) of the blade (2) as a function of the measured speed of the fluid so as to optimize the mechanical efficiency of said blade (2).

10. A vehicle (60) comprising a turbine (1, 9, 20, 34, 43, 63) as claimed in claim 1.
